# EUROPEAN PATENT APPLICATION

(11) **EP 3 135 878 A1**
(43) Date of publication of application: **01.03.2017**
(21) Application number: 16183747.1
(22) Date of filing: 11.08.2016
(51) Int. Cl.: F01N 3/20, B01D 53/86, F01D 25/30, F02C 1/00, F02C 3/30

(54) **TREATMENT OF EMISSIONS IN POWER PLANTS**

(30) Priority: 28.08.2015 US 201514838784
(71) Applicant: General Electric Company, Schenectady, NY 12345 (US)
(72) Inventor: SMITH, Gordon Raymond, Schenectady, NY New York 12345 (US)
(74) Representative: Lee, Brenda

(57) **Abstract**

A method for injecting a reductant into an exhaust gas stream of a combustion turbine engine for selective catalytic reduction. The method may include the steps of: directing the exhaust gas stream through an exhaust duct 402; receiving the directed exhaust gas for treatment by a catalyst 408 positioned within the exhaust duct; providing a reductant in a liquid state; pressurizing and heating the reductant in a manner that maintains the reductant in the liquid state; and injecting the heated, pressurized reductant into the exhaust gas stream such that the reductant flash vaporizes upon injection due to a pressure differential.

## Description

The present application relates generally to treatment of emissions in an exhaust path of a combustion system and, more specifically, to methods and systems for more efficiently reducing pollutant levels, such as nitrogen oxides (or "NOₓ"), from combustion exhaust in power plants.

Governmental agencies continue to tighten regulation of exhaust emissions from power plants. To satisfy these stricter standards, the after-treatment of combustion exhaust is being relied on to a greater extent. As will be appreciated, the reduction of NOₓ from such emissions is of particular concern. Selective catalytic reduction (or "SCR") of NOₓ by nitrogen compounds has proven to be effective in industrial applications. More specifically, power plants, such as industrial gas turbines, steam turbines, and combined-cycle plants, may have exhaust systems that include a SCR system or system for removing NOₓ from exhaust gases. In such cases, a reductant, such as ammonia or urea (or "NH₃"), is injected into the exhaust gas stream as it moves through the SCR system to remove NOₓ from the exhaust gas. One problem associated with SCR systems is so-called "ammonia slip" in which ammonia passes through the SCR system without reacting and exits the exhaust system with the exhaust gases. As will be appreciated, ammonia that fails to react as expected can lead to higher levels of NOₓ emissions. To avoid such issues, it is important that the reductant and exhaust gases are well-mixed such that the distribution of the reductant within the exhaust is substantially uniform through the exhaust flowpath.

Conventional SCR systems include shortcomings that impair efficient performance in a number of ways, which, for example, may lead to issues such as ammonia slip. Conventional systems often are not cost-effective in that their design incurs unnecessary operational and equipment costs. In one type of conventional system, for example, aqueous or anhydrous NH₃ is vaporized prior to injection. In such cases, stored liquid NH₃ is vaporized external to the ducting of the HRSG and then injected into the flowpath as a gas. This is done because injection of the NH₃ as a gas promotes mixing so that the issue of ammonia slip is lessoned. However, as will be appreciated, this process requires overly-complex equipment and energy to operate, which may negatively impact operating costs and overall system efficiencies. Other conventional systems inject liquid NH₃ in the exhaust flowpath. In such cases, though, the adequate mixing of the ammonia in the exhaust gas becomes an issue. The time required for the liquid NH₃ to vaporize after being injected as a liquid so to fully disperse and attain a desired level of mixing inside an exhaust duct may result in increased duct length, which negatively impacts the size of the system and adds equipment and other costs as well. Mixing devices may be used to improve the mixing of the injected liquid ammonia with the exhaust gases so to reduce the required duct length, but this also leads to additional equipment that is typically expensive to install, operate, and maintain.

In total, the manner in which reductants are injected by SCR systems remains a significant area for improvement in the technological field of after-treatment of combustion exhaust. Systems and methods that provide cost-effective injection while also promoting or improving mixing of the reductant and reduces such issues as ammonia slip would be commercially demanded.

The present application thus describes a method for injecting a reductant into an exhaust gas stream of a combustion turbine engine for selective catalytic reduction. The method may include the steps of: directing the exhaust gas stream through an exhaust duct; receiving the directed exhaust gas for treatment by a catalyst positioned within the exhaust duct; providing a reductant in a liquid state; pressurizing and heating the reductant in a manner that maintains the reductant in the liquid state; and injecting the heated, pressurized reductant into the exhaust gas stream such that the reductant flash vaporizes upon injection due to a pressure differential.

The present application may further describe a treatment system for an exhaust gas stream from a combustion turbine system. The treatment system may include: an exhaust duct for directing the exhaust gas stream; a catalyst positioned within the exhaust duct for receiving the exhaust gas stream flowing therethrough; and an injection system for injecting reductant in the exhaust gas stream. The injection system may include: a reductant supply line for supplying the reductant; a nozzle disposed within the exhaust duct that connects to a downstream end of the reductant supply line; a pump coupled with the reductant supply line for pressurizing the reductant; a heater coupled with the reductant supply line for heating the reductant; and a flow controller for maintaining the reductant in the reductant supply line within predetermined temperature and pressure values such that: i) the reductant remains in a liquid state while moving through the reductant supply line; and ii) the reductant flash vaporizes upon injection into the exhaust gas stream due to a pressure differential between the reductant just prior to injection and the exhaust gas stream into which the reductant is injected.

Various features of the present application will become apparent upon review of the following detailed description of the preferred embodiments when taken in conjunction with the drawings and the appended claims.

Various features of this invention will be more completely understood and appreciated by careful study of the following more detailed description of exemplary embodiments of the invention taken in conjunction with the accompanying drawings, in which:
Figure 1 is a schematic illustration of an exemplary gas turbine system;
Figure 2 illustrates a simplified exemplary arrangement of a combined-cycle power plant with a heat recovery steam generator;
Figure 3 illustrates an exemplary internal arrangement of heat transfer equipment within a heat recovery steam generator within which embodiments of the present invention may be used;
Figure 4 schematically illustrates an injection system within a heat recovery steam generator according to an exemplary embodiment of the present invention;
Figure 5 schematically illustrates an injection system within a heat recovery steam generator according to an alternative embodiment of the present invention; and
Figure 6 schematically illustrates an injection system within a heat recovery steam generator according to an alternative embodiment of the present invention.

Various aspects and advantages of the invention are set forth below in the following description, or may be clear from the description, or may be learned through practice of the invention. Reference will now be made in detail to present embodiments of the invention, one or more examples of which are illustrated in the accompanying drawings. The detailed description uses numerical designations to refer to features in the drawings. Like or similar designations in the drawings and description may be used to refer to like or similar parts of embodiments of the invention. As will be appreciated, each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. It is to be understood that the ranges and limits mentioned herein include sub-ranges located within the prescribed limits, inclusive of the limits themselves unless otherwise stated.

Additionally, certain terms have been selected to describe the present invention and its component subsystems and parts. To the extent possible, these terms have been chosen based on the terminology common to the technology field. Still, it will be appreciate that such terms often are subject to differing interpretations. For example, what may be referred to herein as a single component, may be referenced elsewhere as consisting of multiple components, or, what may be referenced herein as including multiple components, may be referred to elsewhere as being a single component. In understanding the scope of the present invention, attention should not only be paid to the particular terminology used, but also to the accompanying description and context, as well as the structure, configuration, function, and/or usage of the component being referenced and described, including the manner in which the term relates to the several figures, as well as, of course, the precise usage of the terminology in the appended claims. Further, while the following examples are presented in relation to a certain type of gas turbine or combined-cycle system, the technology of the present invention also may be applicable to other types of turbine engines as would the understood by a person of ordinary skill in the relevant technological arts.

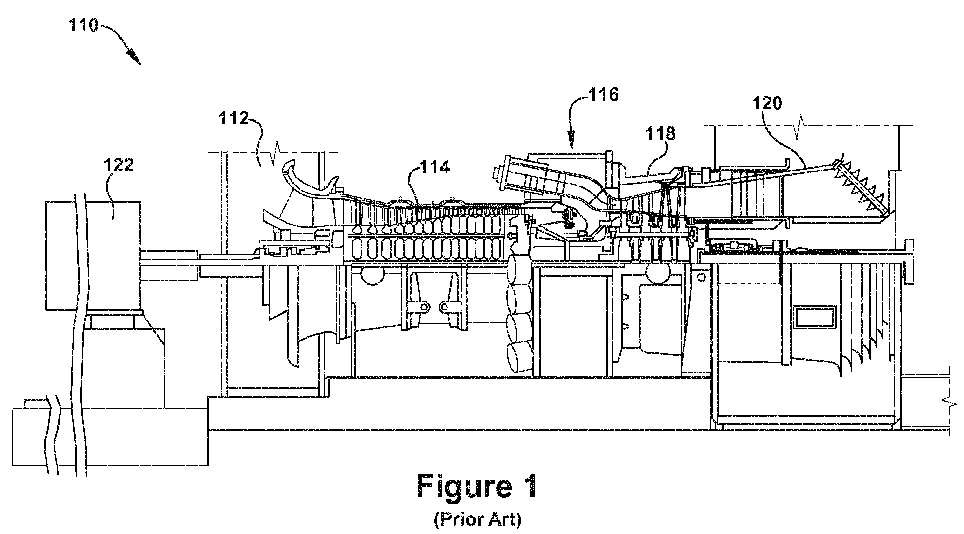

By way of background, referring now to the figures, Figure 1 is a schematic illustration of an exemplary gas turbine system 110 including an intake section 112, a compressor section 114 coupled downstream from the intake section 112, a combustor section 116 coupled downstream from the compressor section 114, a turbine section 118 coupled downstream from the combustor section 116. At the aft end of the system 110, an exhaust section 120 may be operably couple to the turbine section 18. The turbine section 118 may be rotatably coupled to the compressor section 114 and to a load 122, such as, but not limited to, an electrical generator or mechanical drive application. During exemplary operation, the intake section 112 channels air towards compressor section 114. The compressor section 114 compresses the inlet air to higher pressures and temperatures. The compressed air is discharged towards to the combustor section 116 wherein it is mixed with fuel and ignited to generate combustion gases that flow to the turbine section 118 and induces rotation therein, which then drives compressor section 114 and load 122. Exhaust gases exit the turbine section 118 and flow through the exhaust section 120. The exhaust gases may be released to ambient atmosphere, or, as discussed below, may be fed to a heat recovery steam generator and the heat recovered therefrom used to produce steam that drives a steam turbine.

During the combustion of natural gas and liquid fuels, pollutants such as, but not limited to, carbon monoxide (or "CO"), unburned hydrocarbons (or "UHC"), and nitrogen oxides (or "NOₓ") emissions may be formed and emitted into the atmosphere. As will be appreciated, CO and UHC are generally formed during combustion conditions with lower temperatures and/or conditions with an insufficient time to complete a reaction. In contrast, NOₓ is generally formed under higher temperatures. At least some known pollutant emission sources include devices such as, but not limited to, industrial boilers and furnaces, larger utility boilers and furnaces, reciprocating engines, gas turbine engines, steam generators, and other combustion systems.

Modern air quality regulations mandate continuingly reduced emission levels for power generating plants, while at the same time fuel efficiency requirements continue to increase. Due to stringent emission control standards, it is desirable to control NOₓ emissions by suppressing the formation of it. As will be understood, nitrous oxides include NO and NO₂, with NO₂ being known as a pollutant that produces a visible yellow plume from exhaust stacks and further creates "acid rain". Combustion controls alone may prove inadequate to satisfy these often-conflicting performance objectives, and thus continued the improvement of post-combustion exhaust gas treatment systems is desired.

As will be appreciated, one technology for the control NOₓ that is widely used at large power generating stations is selective catalytic reduction (or "SCR"). The flue gases from such power generating stations have a net oxidizing effect due to the high proportion of oxygen that is provided to ensure adequate combustion of the hydrocarbon fuel. Because of thus, the nitrogen oxides that are present in the exhaust gases can be reduced to nitrogen and water only with difficulty. One way to address this problem is through selective catalytic reduction. With this process, the combustion exhaust of the power generating station are mixed with anhydrous or aqueous ammonia and then is passed over a suitable reduction catalyst at prescribed temperatures prior to release into the atmosphere. The ammonia is not a natural part of the combustion exhaust stream, but rather, it is injected into the exhaust stream upstream of the catalyst element for the specific purpose of supporting reduction reactions.

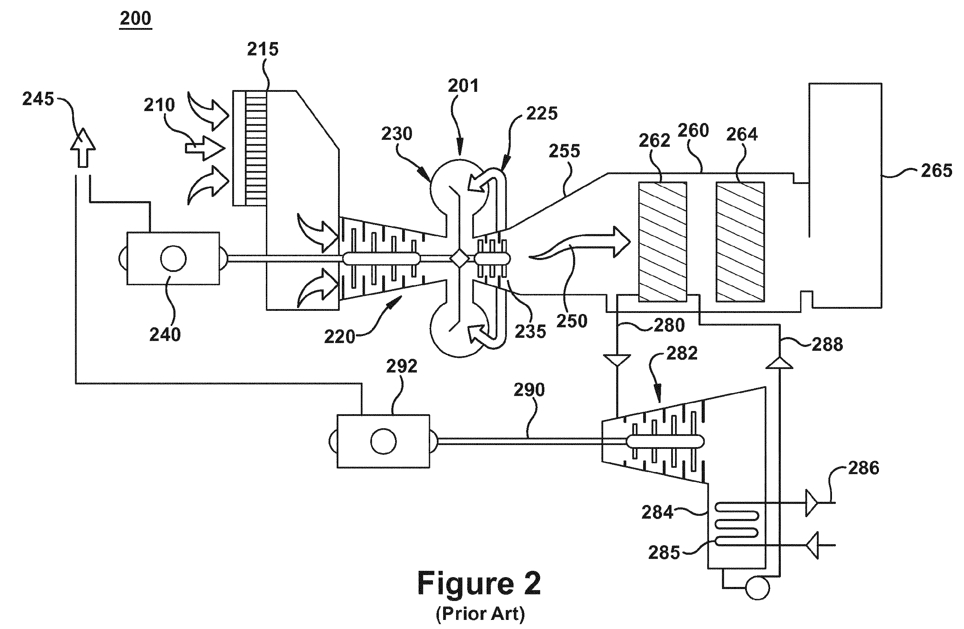

Figure 2 provides a simplified exemplary illustration of a combined-cycle power plant 200. As will be appreciated, the combined-cycle power plant 200 may include a gas turbine 201. Within the gas turbine 201, air 210 is received in an air intake 215 of a compressor 220 to provide compressed air for mixing with fuel 225 in a combustors 230 to supply hot gases to a turbine 235 for driving a shaft connected to generator 240 for producing electricity output 245. Exhaust gases 250 are discharged into an exhaust duct 255, through a heat recovery steam generator 260 and out through stack 265 to atmosphere. The HRSG 260 includes heat exchangers 262 configured to extract heat from the exhaust gases 250 as well as emissions treatment equipment 264 for controlling emissions. The heat extracted from the exhaust gases is used to generate steam 280. The steam 280 is supplied to a steam turbine 282 to drive shaft 290 of generator 292 for producing electricity. The steam 280 then passes to a condenser 284 where cooling water 286 passing through tube bundles condenses the steam to water 288. The water 288 is then returned to the HRSG for completion of a closed cycle. An operating HRSG may include multiple heat exchangers and evaporators, steam systems and water systems for producing steam at different pressures and temperatures in many different configurations. Similarly, the emissions treatment equipment may include multiple treatment elements within the HRSG, which may be adapted to address different pollutants in different ways.

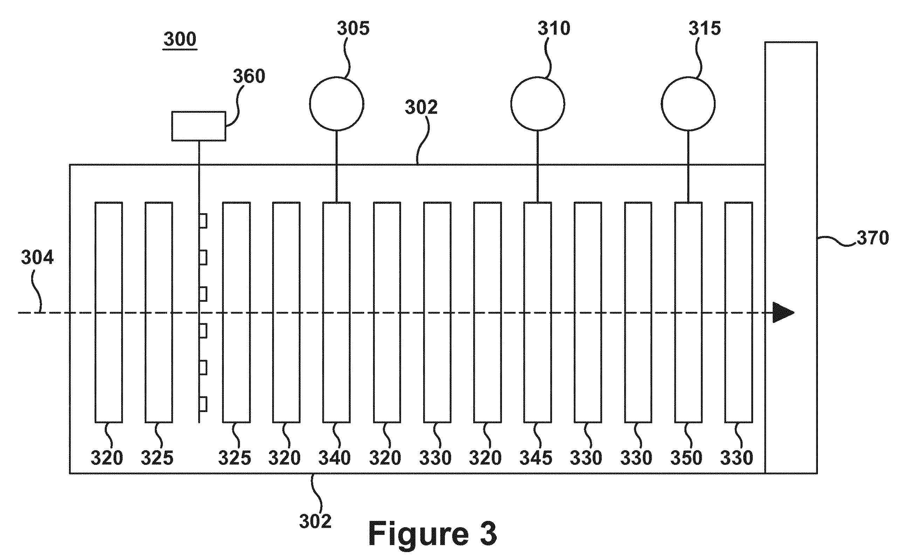

Figure 3 illustrates an internal arrangement of heat transfer equipment within an exemplary HRSG 300. As illustrated, the HRSG 300 may include a conduit or duct 302 for receiving exhaust output or gases 304 from a combustion turbine engine. The HRSG, for example, may be adapted for generating steam at three pressures in a high pressure drum 305, an intermediate pressure drum 310, and a low pressure drum 315, though other configurations are also possible. The steam generated by the HRSG 300 may then be supplied to a high pressure steam turbine, an intermediate pressure steam turbine and a low pressure steam turbine (turbines not shown). The HRSG 300 may include a plurality of superheater heat exchangers 320, reheater heat exchangers 325, and economizer heat exchangers 330. In an exemplary case, the HRSG also may include a high pressure evaporator 340, an intermediate pressure evaporator 345, and a low pressure evaporator 350 adapted for producing steam for the associated high pressure drum 305, intermediate pressure drum 310, and low pressure drum 315. The HRSG 300 also may include a duct burner 360 for supplying heat to exhaust gases 304 in order to enhance steam production output. Each of the above-described heat exchangers and evaporators removes heat and lowers temperature for the exhaust gases, while the duct burners add heat and increase temperature. As discussed in more detail below, emissions treatment equipment may be placed in the exhaust gas flow 304 among the heat exchangers, evaporators and burners to advantageously locate oxidation catalyst for reduced NOx production and discharge out exhaust stack 370. As will be appreciated, HRSGs for use with gas turbine and other combustion systems may include other numbers and arrangements of evaporators and heat exchangers suited for the particular application.

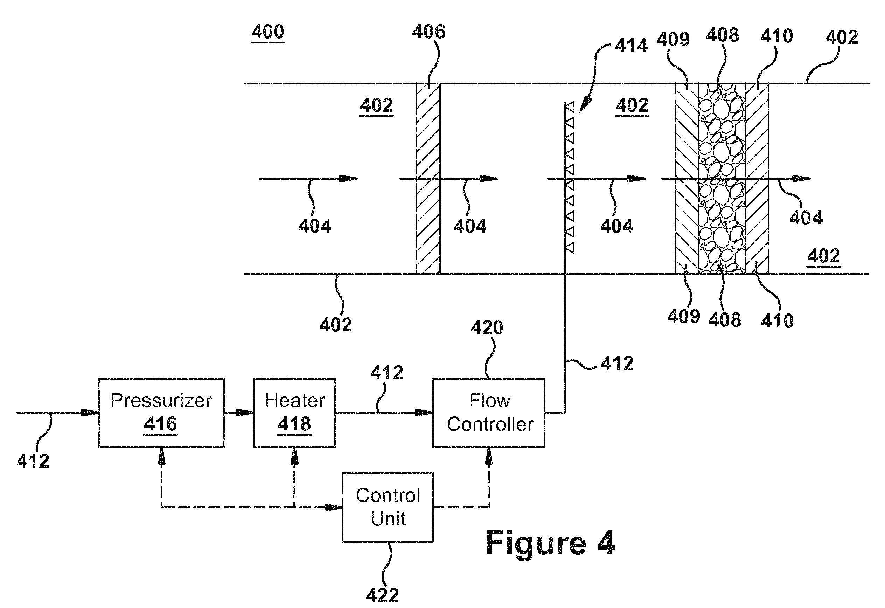

Figure 4 illustrates an injection system 400 according to an exemplary embodiment of the present invention. As will be appreciated, the injection system 400 may be used to inject a reductant, such as ammonia, into the exhaust duct. The injection system 400 may serve an after-treatment system for treating exhaust gases produced by a combustion turbine engine, such as, for example, the exhaust from a gas turbine in a combined-cycle power plant having a HRSG, as described above in relation to Figure 2. As will be appreciated, the present invention also may be used within an exhaust duct of a gas turbine system that does not include a HRSG. As will be provided herein, advantages of the injection system 400 include increased NOₓ conversion and, therefore, decreased NOₓ emissions from a power plant. As will be appreciated, due to the increased efficiency of the injection system described herein, advantages may further include a reduction in catalyst volume, which may lower operating costs. Additionally, the improved efficiency may result in a reduction in both the amount of injected ammonia and the surface area of the SCR catalyst. This reduction may decrease the pressure drop in the exhaust gas flow, which would result in greater output power from the gas turbine at a given level of fuel consumption.

According to exemplary embodiments, the injection system 400 may be positioned in a conduit or exhaust duct 402. For example, the exhaust duct 402 may serve as the exhaust conduit of a HRSG that is configured to receive the exhaust output of a gas turbine engine. In the direction of flow, the exhaust 404 may first pass through a pre-oxidation catalyst 406. As will be understood, the pre-oxidation catalyst may treat unburned hydrocarbons and convert NO to NO₂. This may be done due to the fact that NO₂ reacts more readily with NH₃. Downstream from the pre-oxidation catalyst 406, a SCR catalyst 408 may be located. The SCR catalyst may be, for example, platinum, vanadium, or zeolite, though other types are also possible. As will be appreciated, the SCR catalyst promotes the reaction of NH₃ with NOₓ to form nitrogen and water, thereby reducing NOₓ in the exhaust flow. According to an alternative embodiment, a hydrolysis catalyst 409 may be included. As illustrated, the hydrolysis catalyst 409 may be located upstream of the SCR catalyst 408. The hydrolysis catalyst 409 may promote the reaction of urea with water to form ammonia and carbon dioxide (or "CO₂"), thereby helping to assure the availability of ammonia in the exhaust stream prior to entering the SCR catalyst 408. According to another alternative, an oxidation catalyst 410 may be located downstream of the SCR catalyst 408. As will be appreciated, the oxidation catalyst 410 promotes the breakdown of excess ammonia that does not react in the SCR catalyst. In other words, the oxidation catalyst 410 promotes the oxidation of excess ammonia, thereby limiting the release of ammonia from the SCR system.

The injection system 400, as illustrated, may further include a supply line 412 for delivering NH₃ for injection into the flow through exhaust duct 402. The supply line 412 may connect to a local storage tank or other supply source. According to exemplary embodiments, the NH₃ in the supply line 412 is an aqueous NH₃ solution. The aqueous NH₃ solution, for example, may be between 25% and 40% NH₃ to water. According to certain preferred embodiments, the aqueous NH₃ solution is approximately 33% NH₃ to water, as this solution of aqueous NH₃ has the lowest freezing point and therefore is least likely to freeze during seasonal colder temperatures. The usage of anhydrous NH₃ is also possible.

The supply line 412, as illustrated, may be configured to direct the supply of liquid aqueous NH₃ solution to a nozzle 414 disposed within the duct 402 for injection into and mixing with the exhaust gases 404 moving therethrough. As indicated, the nozzle 414 may include multiple outlet ports. To promote an even application and mixing, the outlet ports of the nozzle 414 may be spaced about a cross-section of the duct 402 in an array. The nozzle 414 may be located upstream of the SCR catalyst 408, the hydrolysis catalyst 409 (if present), and the oxidation catalyst 410 (if present). The nozzle 414 may be located downstream of the pre-oxidation catalyst 406 (if present).

According to further aspects of the present invention, the injection system 400 may include a pressurizer 415, a heater 418, and/or a flow controller 420. These components, as illustrated, may be connected in series along the supply line 412. The pressurizer 415 may include a conventional high-pressure pump configured to pressurize the supply of aqueous NH₃ moving through the supply line 412. Though other arrangements are possible, the heater 418 may be positioned on the supply line 412 downstream of the pressurizer 416. The heater 418 may include any type of conventional heater or heat source, and may be configured to increase the temperature of the pressurized aqueous NH₃ moving through the supply line 412. The temperature to which the pressurized aqueous NH₃ is heated may be one at which it remains liquid due to the pressurization. Downstream of the heater 418, the flow controller 420 may control the flow of the aqueous NH₃ solution to the nozzles 414 and, in turn, the amount released therefrom. The flow controller 420, for example, may include a valve, such as a solenoid valve, and may variably control the amount of liquid aqueous NH₃ solution flowing to the nozzles 414 for release within the exhaust duct 402. According to an alternative embodiment, the function of the pressurizer 416 and flow controller 420 may be combined via the use of a variable speed pump. In such cases, the heater 418 may be positioned downstream of the variable speed pump, though other configurations are also possible. Pursuant to conventional systems and methods, a control unit 422 may be provided to control the operation of the pressurizer 416, the heater 418, and the flow controller 420. The control unit 422 may receive engine operation data and information related to the combined-cycle power plant to aid in determining the timing and quantity of aqueous NH₃ released into the exhaust duct 402.

The release of pressurized, heated aqueous NH₃ into the exhaust 404 through the nozzle 414 may be controlled so to causes the aqueous NH₃ to rapidly turn to vapor or "flash vaporizes" upon release from the outlet ports. As will be appreciated, this rapid vaporization is due to the sharp drop in pressure between the pressure maintained in the supply line 412 just prior to injection and the pressure level within the exhaust duct 402. More specifically, the aqueous NH₃ flashes to vapor due to the fact that it is pressurized and superheated within the supply line 412 prior to release. As will be understood, the boiling point of aqueous NH₃ rises with the increasing pressure. According to exemplary operation of the injection system 400, the aqueous NH₃ in the supply line 412 may be pressurized to between approximately 50 to 100 psi. In contrast, the exhaust 404 with the duct 402 is typically near atmospheric pressure (approximately 14.6 psi). As will be understood, at such elevated pressures, the aqueous NH₃ may be heated to much higher temperatures without boiling. Therefore, after pressurizing the aqueous NH₃, it may be heated by the heater 418 to an elevated temperature level that is selected as one being close to but below the boiling point of aqueous NH₃ at the elevated pressure. Plus, according to exemplary embodiments, the ammonia reductant is heated and pressurized so that it remains in a liquid state while moving through the reductant supply line and then flash vaporizes upon injection into the exhaust gas stream due to it being superheated and the pressure differential between the reductant just before injection and the exhaust gas stream into which the reductant is injected. Because of the pressurization, thus, the NH₃ may be heated without it vaporizing or resulting in a two-phase flow in the supply line 412. As will be appreciated, two-phase flow in the supply line 412 may be undesirable because of the negative impact it has over controlling the amount injected. The flashing of the aqueous NH₃ may result in the NH₃ and water being quickly evaporated and, thus, effectively and evenly mixed with the exhaust gases over the cross-section of the duct 402.

As will be appreciated, the flash vaporization may atomize any portion of the reductant that remains in a liquid state, which results in the efficient mixing of substantially all of the reductant supply injected into the exhaust duct. That is, when the pressurized, heated aqueous NH₃ solution is released into the exhaust 404 through the nozzle 414, the liquid NH₃ rapidly drops in pressure because of the typically low pressure maintained within the exhaust duct 402. As stated, at the elevated temperature to which the reductant is heated, the sudden drop in pressure causes the aqueous NH₃ to almost instantaneously reach a pressure at which it boils. Any portion of the reductant that remains in a liquid state is broken up or atomized into sub-micron size droplets by this flash vaporization. The rapid expansion and resulting sub-micron size of the aqueous NH₃ droplets enables the highly effective mixing of the aqueous NH₃ with exhaust gases. Additionally, the small size of the ammonia droplets may result in their rapid evaporation, which also promotes uniform mixing with the exhaust gas stream. According to exemplary embodiments, the outlet ports of the nozzle 414 are sized and configured so that the sudden pressure drop that causes flash vaporization is achieved across the nozzle 414.

Additionally, as will be appreciated, the aqueous NH₃ loses little heat during the flash vaporization, which results in the atomized or vaporize NH₃ remaining at a relatively elevated temperature. Since the temperature of the aqueous NH₃ is higher than the saturation vapor pressure, the aqueous NH₃ resists condensation even when injected into an exhaust 404 that is at a much lower temperature than the aqueous NH₃. Further, as the temperature of the aqueous NH₃ is increased, the hydrolysis of aqueous NH₃ becomes more efficient, which improves the formation of ammonia needed for the selective catalytic reduction of NOₓ. This may reduce the necessary volume for the hydrolysis catalyst. Also, given the functioning of the system, the NH₃ resulting from the hydrolysis of urea is at an elevated temperature and is well-mixed with the exhaust gases in the exhaust 404, leading to more effective and complete reaction of the ammonia with NOₓ. As will be appreciated, this both increases NOₓ conversion efficiency and reduces the amount of ammonia that is left unreacted after passing through the SCR catalyst, which may reduce ammonia slip and the volume size requirements for the oxidation catalyst. Further, since the ammonia is better utilized, less aqueous NH₃ may need to be consumed in order to achieve acceptable levels of NOₓ conversion. The present invention, thus, improves NOₓ conversion efficiency in ammonia-SCR after-treatment systems. The efficiencies achieved, as described herein, may make the operation of the system more cost-effective.

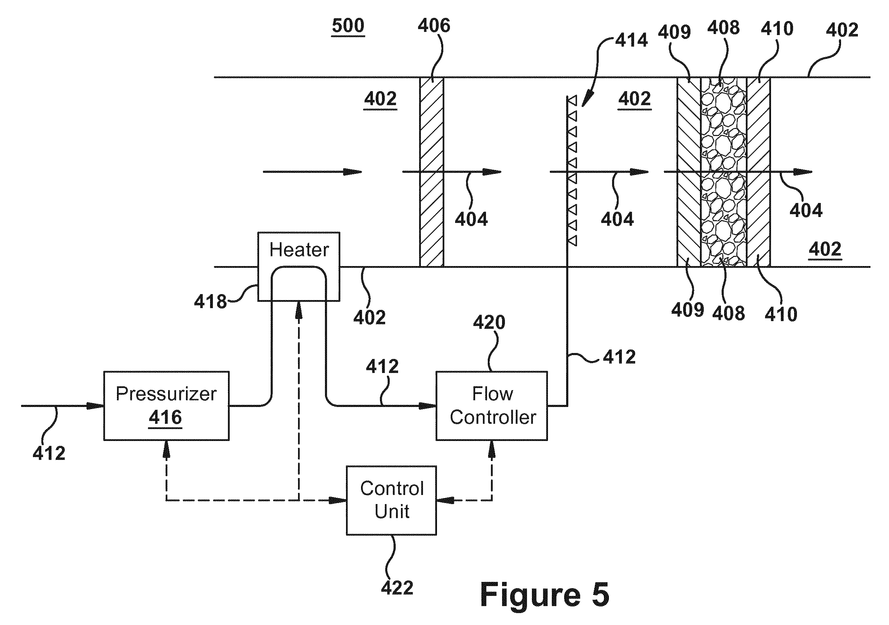

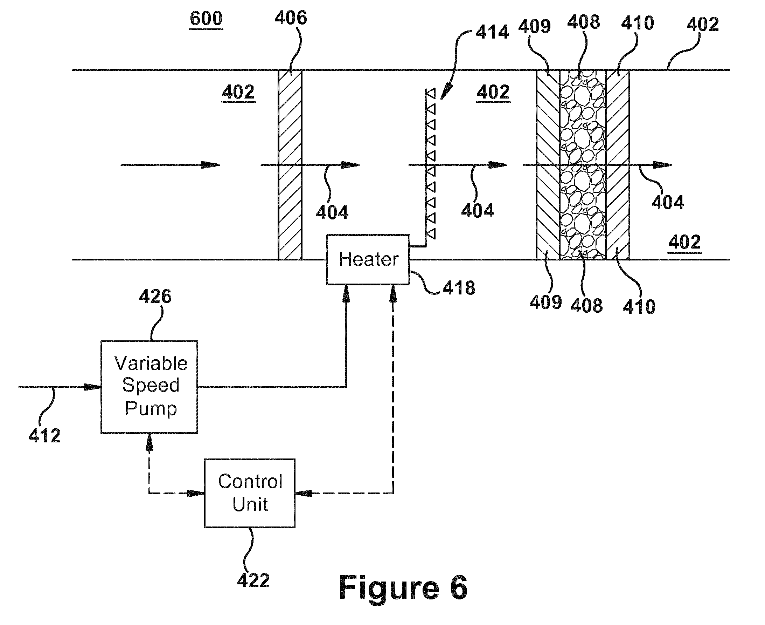

Figures 5 and 6 provide alternative embodiments of injection systems 500, 600 in accordance with certain other aspects of the present invention. As illustrated in relation to the injection system 500 of Figure 5, a heater 418 includes one that is configured to use the exhaust of the gas turbine as a heat source. This may be achieved via conventional heat exchangers and the like. According to the exemplary embodiment illustrated, the supply line 412 may be configured to extend through a section of the exhaust duct 402. As will be appreciated, other heat exchange configurations between the reductant in the supply line 412 and the combustion exhaust are also possible. According to another arrangement, as illustrated in Figure 6 and with reference to injection system 600, the heater 418 is positioned downstream of the pressurizer and flow controller, the function of which has been combined via the use of a variable speed pump 426. In this example, the heater 418 may be configured in a section of the supply line 412 that is just upstream of the nozzle 414 that is configured to absorb heat from the exhaust 404 within the flow duct 402. As will be appreciated, this arrangement may be used to further simplify the injection system.

As will be appreciated, according to certain embodiments, the present invention may enable system efficiencies and cost savings, while also promoting effective NOₓ conversion. As discussed, conventional systems for injecting ammonia as a liquid or a vapor have certain advantages as well as inherent shortcomings. For example, injecting ammonia as a liquid has the advantage over vapor due to the efficiencies related to handling and delivering a liquid. Specifically, because it is so much more dense, liquid ammonia may be delivered to the injectors much more cost-effectively, whereas the delivery of vapor at the same mass flow rate would requires a much greater volume and, therefore, greater equipment costs. However, when ammonia is injected into the exhaust flow stream as a liquid, it must first absorb sufficient heat to vaporize before it may be used efficiently in the SCR process. As will be appreciated, this vaporization of the ammonia liquid within the exhaust duct takes time, which necessarily adds to the length of the duct, which increases equipment costs significantly. Special mixing equipment may be used to hasten the vaporization, but such equipment also adds significant costs. As provided above, according to certain aspects present application, the inefficiencies associated with both liquid and vapor may be overcome by adding the vaporization heat to liquid ammonia external to the duct, but maintaining it as a liquid via pressurization, thereby creating superheated ammonia liquid for injecting. The superheated liquid ammonia may be heated to a sufficient temperature such that vaporization, partially or completely, occurs almost instantaneously upon injection into the duct. With this approach, as will be appreciated, the delivery efficiencies associated with liquid ammonia may be realized, while also taking advantage of the mixing efficiencies associated with vapor ammonia once inside the exhaust duct.

As one of ordinary skill in the art will appreciate, the many varying features and configurations described above in relation to the several exemplary embodiments may be further selectively applied to form the other possible embodiments of the present invention. For the sake of brevity and taking into account the abilities of one of ordinary skill in the art, all of the possible iterations is not provided or discussed in detail, though all combinations and possible embodiments embraced by the several claims below or otherwise are intended to be part of the instant application. In addition, from the above description of several exemplary embodiments of the invention, those skilled in the art will perceive improvements, changes and modifications. Such improvements, changes and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

Various aspects and embodiments of the present invention are defined by the following numbered clauses:
1. A method for injecting a reductant into an exhaust gas stream of a combustion turbine engine for selective catalytic reduction, the method comprising the steps of:
   directing the exhaust gas stream through an exhaust duct;
   receiving the directed exhaust gas stream for treatment by a catalyst positioned within the exhaust duct;
   providing a reductant in a liquid state;
   pressurizing and heating the reductant in a manner that maintains the reductant in the liquid state;
   injecting the heated, pressurized reductant into the exhaust gas stream such that the reductant flash vaporizes upon injection due to a pressure differential.
2. The method according to clause 1, further comprising the steps of:
   providing a pump for pressurizing the reductant; and
   providing a heater for heating the reductant.
3. The method according to any preceding clause, wherein the reductant comprises ammonia; and
   wherein the pressure differential comprises a difference between: i) a pressure of the heated, pressurized reductant just prior to injection; and ii) a pressure of the exhaust gas stream into which the reductant is injected.
4. The method according to any preceding clause, further including the step of providing a reductant supply line for directing the reductant through the pump and the heater; and
   wherein, relative to a direction of flow of the reductant through the reductant supply line, the pump is positioned upstream of the heater.
5. The method according to any preceding clause, wherein the step of pressurizing and heating the reductant comprises:
   pressurizing the reductant with the pump and then heating the pressurized reductant with the heater while maintaining the reductant in the liquid state.
6. The method according to any preceding clause, wherein the pressurized reductant is heated to a temperature substantially close to, but not in excess of a boiling temperature of the pressurized reductant.
7. The method according to any preceding clause, further comprising the step of a providing a nozzle disposed within the exhaust duct for injecting the heated, pressurized reductant into the exhaust gas stream;
   wherein the reductant comprises aqueous ammonia.
8. The method according to any preceding clause, further comprising the steps of:
   providing a reductant supply line between the pump and the nozzle through which the pressurized, heated reductant is directed;
   wherein the heater is disposed between the pump and the nozzle and configured to heat the reductant after the reductant is pressurized by the pump.
9. The method according to any preceding clause, wherein the provided heater comprises a heat exchanger;
   wherein the heat exchanger includes a configuration for exchanging heat between the exhaust gas stream and the pressurized reductant.
10. The method according to any preceding clause, further including the step of:
   providing a control unit that is configured to maintaining the pressurized reductant at a predetermined temperature prior to injection, the predetermined temperature coinciding with one at which the reductant remains in the liquid state and flash vaporizes upon injection in a manner desirably according to a mixing characteristic.
11. The method according to any preceding clause, wherein the step of maintaining the pressurized, heated reductant in the liquid state comprises providing a valve for controlling a flow of the reductant through the reductant supply line.
12. The method according to any preceding clause, wherein the valve provided comprises a solenoid valve that is controllably linked with the control unit.
13. The method according to any preceding clause, further comprising the step of atomizing the reductant into sub-micron size droplets via the flash vaporization;
   wherein the provided pump comprises a variable speed pump.
14. A treatment system for an exhaust gas stream from a combustion turbine system, the treatment system including:
   an exhaust duct for directing the exhaust gas stream;
   a catalyst positioned within the exhaust duct for receiving the exhaust gas stream flowing therethrough; and
   an injection system for injecting reductant in the exhaust gas stream, the injection system including:
      a reductant supply line for supplying the reductant;
      a nozzle disposed within the exhaust duct that connects to a downstream end of the reductant supply line;
      a pump coupled with the reductant supply line for pressurizing the reductant;
      a heater coupled with the reductant supply line for heating the reductant; and
      a flow controller for maintaining the reductant in the reductant supply line within predetermined temperature and pressure values such that: i) the reductant remains in a liquid state while moving through the reductant supply line; and ii) the reductant flash vaporizes upon injection into the exhaust gas stream due to a pressure differential between the reductant just prior to injection and the exhaust gas stream into which the reductant is injected.
15. The system according to any preceding clause, wherein the flow controller includes:
   a valve operatively connected to the reduction supply line for controlling an injection rate for the reductant into the exhaust stream; and
   a control unit controllably coupled to the valve for controlling a valve flow setting related thereto.
16. The system according to any preceding clause, wherein the flash vaporization of the reductant includes rapid atomization;
   wherein the control unit is controllably coupled to the pump and the heater for controlling the pressurizing and heating the reductant so to attain the predetermined temperature and pressure values; and
   wherein the valve is a solenoid valve.
17. The system according to any preceding clause, wherein the rapidly atomized reductant includes sub-micron sized droplets.
18. The system according to any preceding clause, wherein the exhaust duct comprises a heat recovery steam generator.
19. The system according to any preceding clause, wherein the reductant comprises aqueous ammonia; and
   wherein the heater is disposed between the pump and the nozzle and configured to heat the reductant after the reductant is pressurized by the pump.
20. The system according to any preceding clause, wherein the heater comprises a heat exchanger, the heat exchanger comprises a configuration for exchanging heat between the exhaust gas stream and the pressurized reductant.

## Claims

1. A method for injecting a reductant into an exhaust gas stream (404) of a combustion turbine engine for selective catalytic reduction, the method comprising the steps of:
directing the exhaust gas stream through an exhaust duct (402);
receiving the directed exhaust gas stream (404) for treatment by a catalyst positioned within the exhaust duct;
providing a reductant in a liquid state;
pressurizing and heating the reductant in a manner that maintains the reductant in the liquid state;
injecting the heated, pressurized reductant into the exhaust gas stream such that the reductant flash vaporizes upon injection due to a pressure differential.

2. The method according to claim 1, further comprising the steps of:
providing a pump (416) for pressurizing the reductant; and
providing a heater (418) for heating the reductant.

3. The method according to any preceding claim, wherein the reductant comprises ammonia; and
wherein the pressure differential comprises a difference between: i) a pressure of the heated, pressurized reductant just prior to injection; and ii) a pressure of the exhaust gas stream into which the reductant is injected.

4. The method according to any preceding claim, further including the step of providing a reductant supply line for directing the reductant through the pump (416) and the heater; and
wherein, relative to a direction of flow of the reductant through the reductant supply line, the pump is positioned upstream of the heater.

5. The method according to any preceding claim, wherein the step of pressurizing and heating the reductant comprises:
pressurizing the reductant with the pump and then heating the pressurized reductant with the heater while maintaining the reductant in the liquid state.

6. The method according to any preceding claim, wherein the pressurized reductant is heated to a temperature substantially close to, but not in excess of a boiling temperature of the pressurized reductant.

7. The method according to any preceding claim, further comprising the step of a providing a nozzle (414) disposed within the exhaust duct for injecting the heated, pressurized reductant into the exhaust gas stream;
wherein the reductant comprises aqueous ammonia.

8. The method according to claim 7, further comprising the steps of:
providing a reductant supply line between the pump and the nozzle (414) through which the pressurized, heated reductant is directed;
wherein the heater is disposed between the pump and the nozzle and configured to heat the reductant after the reductant is pressurized by the pump.

9. The method according to any preceding claim, wherein the provided heater comprises a heat exchanger;
wherein the heat exchanger includes a configuration for exchanging heat between the exhaust gas stream and the pressurized reductant.

10. The method according to any preceding claim, further including the step of:
providing a control unit that is configured to maintaining the pressurized reductant at a predetermined temperature prior to injection, the predetermined temperature coinciding with one at which the reductant remains in the liquid state and flash vaporizes upon injection in a manner desirably according to a mixing characteristic.

11. The method according to claim 10, wherein the step of maintaining the pressurized, heated reductant in the liquid state comprises providing a valve for controlling a flow of the reductant through the reductant supply line.

12. The method according to claim 11, wherein the valve provided comprises a solenoid valve that is controllably linked with the control unit.

13. The method according to any preceding claim, further comprising the step of atomizing the reductant into sub-micron size droplets via the flash vaporization;
wherein the provided pump comprises a variable speed pump.

14. A treatment system (100) for an exhaust gas stream from a combustion turbine system, the treatment system including:
an exhaust duct (402) for directing the exhaust gas stream;
a catalyst (408) positioned within the exhaust duct for receiving the exhaust gas stream flowing therethrough; and
an injection system for injecting reductant in the exhaust gas stream, the injection system including:
a reductant supply line for supplying the reductant;
a nozzle (414) disposed within the exhaust duct that connects to a downstream end of the reductant supply line;
a pump (416) coupled with the reductant supply line for pressurizing the reductant;
a heater (418) coupled with the reductant supply line for heating the reductant; and
a flow controller (420)
for maintaining the reductant in the reductant supply line within predetermined temperature and pressure values such that: i) the reductant remains in a liquid state while moving through the reductant supply line; and ii) the reductant flash vaporizes upon injection into the exhaust gas stream due to a pressure differential between the reductant just prior to injection and the exhaust gas stream into which the reductant is injected.

15. The system (400) according to claim 14, wherein the flow controller (420) includes:
a valve operatively connected to the reduction supply line for controlling an injection rate for the reductant into the exhaust stream; and
a control unit controllably coupled to the valve for controlling a valve flow setting related thereto.
